# FASCICULE DE BREVET EUROPEEN

(11) **EP 2 320 748 B1**
(45) Date de publication et mention de la délivrance du brevet: **19.09.2018**
(21) Numéro de dépôt: 09807964.3
(22) Date de dépôt: 18.08.2009
(51) Int. Cl.: A23K 40/10, A23K 40/30, A23K 20/10, A23K 50/30

(54) **ADDITIF POUR L'ALIMENTATION ANIMALE ET SON PROCÉDÉ DE PRÉPARATION**
ZUSATZ FÜR TIERFUTTER UND VERFAHREN ZU SEINER HERSTELLUNG
ADDITIVE FOR ANIMAL FEED AND METHOD FOR THE PREPARATION THEREOF

(30) Priorité: 19.08.2008 FR 0804617
(43) Date de publication de la demande: 18.05.2011
(73) Titulaire: Pancosma Société Anonyme pour l'Industrie des Produits Biochimiques, 1218 Le Grand-Saconnex (CH)
(72) Inventeur: MEUNIER, Jean-Philippe, F-01170 Cessy (FR); RAULET, Christelle, F-74300 Thyez (FR); CALLEJON, Laurence, F-01630 Saint Genis Pouilly (FR)
(74) Mandataire: Moinas & Savoye SARL
(86) Numéro de dépôt international: PCT/IB2009/006569
(87) Numéro de publication internationale: WO 2010/020853

(56) Documents cités:
- EP-A- 1 815 754
- AU-B2- 765 160
- FR-A- 2 748 393
- FR-A- 2 876 028
- GB-A- 1 266 033
- US-A- 6 156 332
- US-B2- 6 660 382

## Description

L'invention concerne un additif destiné, notamment, à favoriser la prise alimentaire par des animaux tels que les porcelets. L'invention a trait, également, à un procédé de préparation d'un tel additif.

### Arrière-plan de l'invention

Pour des raisons économiques, chez les animaux de rente, la consommation doit être optimale durant la période de l'élevage. Toutefois, différentes situations (sevrage, stress, infections...) peuvent s'accompagner d'une vulnérabilité accrue de la santé de l'animal. Pour prévenir ce risque, l'aliment est parfois supplémenté en additifs divers, tels que des extraits de plante.

En effet, les plantes, de par leurs composants actifs intrinsèques, ont montré qu'elles pouvaient avoir une action positive sur l'environnement digestif. C'est pourquoi depuis de nombreuses années elles sont utilisées comme additifs en alimentation animale.

L'utilisation d'extraits de plante joue pleinement son rôle en cas de faiblesse de l'animal : stress, chaleur, problème digestif, etc., états qui s'accompagnent généralement d'une baisse de l'appétence et de la prise alimentaire. Il s'ensuit que l'animal rentre dans un cycle négatif, avec une baisse de la consommation aggravant son état physiologique.

Certains extraits végétaux, tels que les huiles essentielles, résines, oléorésines et arômes, existent sous forme liquide, voire pâteuse.

Ces extraits végétaux sont parfois utilisés peu de temps après leur obtention. Leur conservation ne peut être assurée que pendant une période de temps relativement courte, car un stockage prolongé de quelques mois, voire quelques semaines, entraîne une perte de leurs propriétés qui sont souvent liées à certains de leurs constituants très volatils ou sensibles à l'oxydation.

Il faut également noter qu'une forme liquide est souvent difficile à disperser de façon homogène dans l'aliment, d'où la nécessité de fixer les extraits végétaux sur un support solide, qui se présente sous la forme de poudre.

De plus, un certain nombre des molécules dont sont constitués ces extraits végétaux peuvent :
- être toxiques ou irritantes pour le manipulateur
- poser des problèmes d'arrière-goût ou d'inappétence,
- être incompatibles avec un co-ingrédient utilisé dans les pré-mélanges ou dans l'aliment,
- être sensibles aux différents processus de fabrication de l'aliment (granulation à la vapeur...) .

C'est pourquoi des techniques d'incorporation dans une matrice ont été développées.

Les techniques actuellement utilisées pour l'incorporation des extraits végétaux dans une matrice sont nombreuses. A titre d'exemples, on peut citer :
- le séchage par pulvérisation (en anglais, "spray drying"),
- la coacervation,
- le refroidissement par pulvérisation ("spray cooling/chilling"),
- l'extrusion,
- la granulation et
- la granulation en lit fluidisé.

Les produits issus de ces techniques d'incorporation sont essentiellement des micro-particules dans lesquelles l'extrait de plante est piégé dans une matrice.

Dans une telle configuration, une partie non négligeable des principes actifs se retrouve en surface et donc en contact direct avec l'environnement. Cela peut avoir un impact négatif sur la consommation de l'aliment car les extraits végétaux peuvent avoir un effet gustatif répulsif ou irritant qui défavorise la prise d'aliment par l'animal et entraîne une baisse de ses performances de croissance.

On cherche alors à stimuler l'appétit de l'animal, pour que ce dernier consomme le maximum d'aliments supplémentés, en lui offrant un aliment dont il apprécie particulièrement la saveur sucrée. Ceci peut être réalisé en ajoutant directement à la matrice et aux extraits végétaux un édulcorant.

Toutefois, les extraits de plante sous forme de microparticules incorporées dans une matrice sont généralement de taille relativement importante afin de favoriser l'effet protecteur de la matrice (en diminuant la surface spécifique et donc la surface d'échange avec le milieu extérieur) lors du stockage ou lors de leur incorporation à l'aliment.

Ceci n'est pas sans conséquence sur la distribution des microparticules dans l'aliment une fois granulé. Une forte hétérogénéité de dispersion peut alors se produire au niveau des granulés, entraînant des variations dans le profil gustatif des aliments, une bouchée pouvant présenter un goût irritant à peine perceptible, tandis que la bouchée suivante peut être, elle, très irritante voire répulsive avec un effet masquant de l'édulcorant insuffisant. Cette hétérogénéité peut avoir des conséquences sur la consommation de l'animal, en particulier chez les plus jeunes. C'est pourquoi, il est nécessaire que la quantité d'édulcorant soit toujours présente dans la même proportion que l'extrait de plante et ceci dans chaque granulé ou bouchée.

Pour remédier à cela, on ajoute parfois une couche d'enrobage afin de séparer totalement les extraits végétaux du milieu extérieur. Différents excipients d'enrobage peuvent être utilisés tel que des dérivés de cellulose, des graisses hydrogénées, des gommes (gomme arabique), etc.

Dans les additifs habituellement introduits dans l'alimentation animale, les excipients d'enrobage généralement utilisés se bornent à neutraliser les problèmes d'odeur, de goût ou d'irritation des extraits végétaux utilisés, ils ne favorisent pas la consommation de ces additifs.

Il a alors été envisagé d'utiliser du sucre. Essentiellement constitué de sucrose ou saccharose, c'est un glucide apprécié des animaux mais il présente des inconvénients, notamment son coût relativement élevé, son caractère encombrant, les risques de sa caramélisation lors du chauffage des aliments et la menace du déclenchement de diarrhées lors de sa consommation excessive.

Par ailleurs, dans l'état de la technique on connaît le document FR2876028 qui décrit un additif pour l'alimentation animale sous forme pulvérulente qui comprend des granules en silice précipitée contenant un ou plusieurs extraits de plante adsorbés et/ou absorbés et pourvus d'un enrobage de matériau protecteur.

### Exposé sommaire de l'invention

La présente invention vise donc à remédier aux inconvénients précités grâce à un additif alimentaire selon la revendication 1. Cet enrobage peut éventuellement comprendre en outre au moins un composé choisi parmi les potentiateurs et les arômes.

L'additif alimentaire selon l'invention associe donc les bénéfices des extraits de plante sur la physiologie de l'animal avec un enrobage à base d'édulcorant qui permet non seulement de neutraliser des goûts désagréables éventuels et masquer des arrière-goûts éventuels mais également de favoriser la prise alimentaire en stimulant l'appétit de l'animal.

De plus, il permet de préserver l'intégrité du/des principes actifs vis-à-vis de l'environnement pendant une période de stockage prolongé.

L'invention se rapporte aussi à un procédé de préparation d'un additif selon l'invention selon la revendication 14.

Ainsi, le procédé selon l'invention permet notamment :
- d'obtenir une homogénéité de la répartition des extraits de plante et/ou des arômes dans la matrice,
- de protéger le/les principes actifs et/ou molécules aromatiques lors de leur incorporation dans l'aliment, et
- de protéger l'environnement de toxicité potentiel du/des principes actifs.

### Exposé détaillé de l'invention

### a) Additif selon l'invention

L'additif selon l'invention se présente sous la forme de granulés dont chacun comprend une matrice incorporant au moins au moins un extrait de plante actif et/ou au moins un arôme.

Par « extrait de plante actif », il faut entendre, dans le présent exposé, un extrait de plante ayant une activité, c'est-à-dire un effet, notamment thérapeutique, sur l'état de l'animal. L'extrait de plante actif est de préférence un principe actif.

Par « arôme », il faut entendre, dans le présent exposé, un additif alimentaire destiné à donner un parfum, une odeur, une saveur ou un arôme particulier à l'aliment.

Le matériau constituant la matrice comprend au moins un des composés choisi parmi la maltodextrine, l'amidon natif ou modifié, la gomme arabique, la gomme guar, une lécithine, l'acide alginique ou ses dérivés, l'agar, la gomme de caroube, la gomme xanthane, le sorbitol ou ses dérivés, le mannitol, le glycérol, une pectine, un alginate, une carraggénane, la cellulose ou l'un de ses dérivés, une saponine, une graisse hydrogénée, un glycéride d'acide gras ou ses dérivés ou un mélange de deux au moins de ces composés.

L'arôme est un arôme alimentaire tel que défini, notamment, par la directive européenne 88/388/CEE qui classe les arômes alimentaires en 5 familles : nature, identique naturel, artificiel, de transformation et de fumée.

Il existe au moins deux ouvrages de référence énumérant les arômes : « Perfume and Flavor Chemicals », de Steffen Actander et « Fenaroli's Handbook of Flavor Ingrédients », de George A. Burdock.

L'extrait de plante actif peut être d'une nature très variée. Ce peut être, par exemple, une oléorésine, une huile essentielle ou un principe actif naturel ou obtenu à partir d'une huile essentielle.

Il est également possible d'utiliser un extrait de plante actif artificiel, c'est-à-dire obtenu en tout ou partie par synthèse organique.

Selon l'invention, chaque granulé comporte un enrobage qui comprend au moins un composé choisi parmi les édulcorants et peut éventuellement comporter au moins un composé choisi parmi les potentiateurs et les arômes.

L'édulcorant est un agent qui apporte le goût sucré. Ce peut être de la saccharine, du saccharinate de sodium ou de calcium, de l'aspartame, de l'acésulfame K, un cyclamate, du stévioside, ou éventuellement un autre édulcorant intense d'origine naturelle ou de nature identique.

Bien entendu, il est possible d'utiliser une combinaison de ces édulcorants, suivant toutes proportions.

De préférence, on utilise comme édulcorant du saccharinate de sodium.

Le deuxième constituant éventuel de l'enrobage est un potentiateur. Ce dernier a un double effet. D'abord, il prolonge la perception du goût sucré qui, en son absence, serait trop fugitive. Ensuite, le potentiateur a en général pour autre effet de masquer les goûts secondaires ou parasites de l'édulcorant, par exemple de masquer le goût amer et métallique de la saccharine ou de ses sels de sodium et de calcium.

Comme potentiateur, on peut utiliser de la glycyrrhizine, du glycyrrhizinate d'ammonium, de potassium, de sodium, ou d'un autre métal alcalin ou alcalino-terreux, de la thaumatine, du kokumi de la néohespéridine dihydrochalcone (NHDC) ou une combinaison de ces potentiateurs, suivant toutes proportions.

De préférence, on utilise comme potentiateur du glycyrrhizinate de mono-ammonium.

Le mélange d'enrobage peut aussi comprendre également au moins un arôme dont le rôle est également de masquer les goûts secondaires ou parasites de l'édulcorant. Cet arôme de l'enrobage peut être identique, similaire ou différent de l'arôme ou des arômes se trouvant dans la matrice.

Comme arôme pour l'enrobage, on peut choisir, en particulier, la vanilline (3-méthoxy-4-hydroxybenzaldéhyde), l'éthyl-vanilline (3-éthoxy-4-hydroxybenzaldéhyde), un autre dérivé de la vanilline qui a un pouvoir aromatique semblable, le maltol ou l'éthyl-maltol.

De préférence, on utilise comme arôme un mélange de vanilline et de maltol.

De préférence, l'enrobage selon l'invention comprend :
- de 50 à 100% en poids d'édulcorant(s) ;
- de 0 à 25% et de préférence de 0 à 5% en poids de potentiateur (s) ; et
- de 0 à 25% en poids d'arôme(s) ;
- la somme de ces constituants étant bien entendu égale à 100% en poids rapporté au poids total de l'enrobage.

De préférence, le noyau selon l'invention comprend :
- de 5 à 95% en poids d'extrait(s) de plante actif(s) et/ou d'arôme(s) ;
- de 5 à 95% en poids de matrice ; et
- la somme de ces constituants étant bien entendu égale à 100% en poids rapporté au poids total du noyau.

De préférence, l'additif pour l'alimentation animale selon l'invention comprend :
- de 10 à 90% en poids du mélange d'enrobage ;
- de 10 à 90% en poids du noyau ;
- la somme de ces constituants étant égale à 100% du poids total de l'additif.

L'additif selon l'invention peut être utilisé directement dans l'alimentation des animaux d'élevage à une dose moyenne de 70 à 1000 g/t, de préférence d'environ 100 g/t.

### b) Procédé selon l'invention

### 1 ^{ère} étape

La première étape de fabrication de l'additif selon l'invention consiste à former des granulés comprenant chacun au moins un extrait de plante actif et/ou au moins un arôme, qui est/sont incorporé(s) dans une matrice.

On peut éventuellement ajouter à la matrice un ou plusieurs émulsifiant(s) classique(s) ou tout composé possédant un pouvoir émulsifiant.

Pour la formation des granulés, on peut utiliser tout procédé de granulation connu.

On peut alors préparer une émulsion, en général aqueuse, contenant le principe actif et le matériau devant constituer la matrice.

Ensuite, l'émulsion est pulvérisée pour former les granulés qui sont constitués de la matrice incorporant le principe actif.

La technique utilisée est une granulation par pulvérisation dans un lit fluidisé. L'intérêt de cette technique est qu'elle offre la possibilité de développer des microparticules relativement sphériques et homogènes permettant d'appliquer dans une seconde étape un enrobage de bonne qualité.

### 2^{ème} étape

La deuxième étape consiste à enrober les microparticules obtenues à l'issue de la première étape.

L'enrobage est généralement réalisé à partir d'un édulcorant éventuellement mélangé à au moins un potentiateur et/ou à au moins un arôme, de préférence sous la forme d'une solution, généralement aqueuse.

Ce mélange ou cette solution est ensuite pulvérisé(e) sur les microparticules qui ont été préalablement mises en suspension dans un lit fluidisé. Le produit final ainsi obtenu se présente sous la forme de granulés enrobés dont la répartition extrait de plante actif/édulcorant (et éventuellement potentiateur(s) et/ou arôme(s)) est homogène et dont la proportion pourra donc être constante dans l'aliment.

### Exemple

### Formulation

Une formulation a été préparée en utilisant comme principe actif le carvacrol et comme matrice de la maltodextrine. L'enrobage appliqué ensuite était constitué d'un mélange comprenant un édulcorant, un potentiateur et des arômes.

### 1. Matières premières

Le carvacrol (2-méthyl-5-iso-propylphénol) (Ernesto, Ventos, Barcelone, Espagne) est utilisé en tant que principe actif. La maltodextrine Granadex 20 (Avebe veendam Hollande) et de l'amidon modifié HICap 100 (National Starch, France) sont utilisés comme excipient pour la granulation en lit d'air fluidisé. Enfin, un mélange de saccharine, de maltol et de glycyrrhizinate de mono-ammonium est employé comme solution d'enrobage.

### 2. Préparation des microparticules

### 2.1 Préparation de la formulation F1

Dans une première étape, le carvacrol est mélangé avec la maltodextrine et l'eau (Tableau N°1). Puis la solution est homogénéisée dans un homogénéisateur de laboratoire Niro Soavi, type panda (Niro Soavi France, Saint Quentin en Yvelines France) à une pression de 250 bars afin de créer une émulsion (micelles inférieures à 5 µm).

**Tableau N°1: Composition de l'émulsion à base de carvacrol**

| Composé | Quantité (g) | Emulsion (%) | Solide (%) |
|---|---|---|---|
| Maltodextrine | 180 | 18 | 45 |
| Hicap 100 | 100 | 10 | 25 |
| Carvacrol | 120 | 12 | 30 |
| Eau | 600 | 60 | - |
| Total | 1000 | | 100,00 |

Cette composition est ensuite granulée par pulvérisation dans un lit d'air fluidisé de type Procell 5 (Glatt GmbH, Weimar, Allemagne) suivant les conditions décrites dans le tableau N°2. Après fabrication, les microparticules sont tamisées afin d'obtenir une taille homogène comprise entre 50 et 200 µm (formulation F1).

**Tableau N°2: Paramètres de granulation de la formulation F1 dans un lit d'air fluidisé de type Procell 5 (Glatt GmbH, Weimar, Allemagne)**

| Paramètres | Pulvérisation par le bas |
|---|---|
| Débit d'air m³/h | 100-140 |
| Température du produit (°C) | 27-36 |
| Buse (mm) | 1 |
| Pression d'air de pulvérisation (bar) | 2,5 |
| Débit de pulvérisation (g/min) | 15 |

### 2.2. Préparation de la formulation F2

L'enrobage de la composition F1 est réalisé en lit d'air fluidisé de type Procell 5 en utilisant comme excipient d'enrobage un mélange (tableau N°3) à base d'édulcorant.

On prépare une solution de saccharinate de sodium en introduisant 0,780 litres d'eau dans une cuve, en chauffant jusqu'à 70°C, puis en ajoutant lentement 1,051 kg de saccharinate de sodium et en agitant la solution pendant 30 minutes jusqu'à dissolution complète (la solution devient transparente). Ensuite, on ajoute lentement le glycyrrhyzinate de mono-ammonium, l'arôme de type maltol, puis on laisse la dissolution s'opérer pendant 30 minutes sous agitation à 70°C. Lorsque la solution obtenue devient transparente, on procède à l'opération d'enrobage dans un lit d'air fluidisé dont les conditions de travail sont décrites dans le tableau N°4. L'enrobage est réalisé jusqu'à 50% (p/p) du produit final c'est-à-dire jusqu'à l'obtention de la formulation F2 (tableau N°5).

**Tableau N°3: Composition de la formulation d'enrobage**

| Composé | Quantité (g) | Emulsion (%) | Solide (%) |
|---|---|---|---|
| Saccharinate de sodium | 1,077 | 57,2 | 97,4 |
| Maltol | 0,022 | 1,2 | 2,3 |
| Glycyrrhizinate de mono-ammonium | 0,003 | 0,2 | 0,3 |
| Eau | 0,780 | 41,4 | 0,0 |
| Total | 1,882 | 100 | 100,00 |

**Tableau N°4 : Paramètres d'enrobage (50%, p/p) de la formulation F2 dans un lit d'air fluidisé de type Procell 5 (Glatt GmbH, Weimar, Allemagne)**

| Paramètres | Pulvérisation par le bas |
|---|---|
| Débit d'air m³/h | 120-300 |
| Température du produit (°C) | 27-36 |
| Buse (mm) | 1,2 |
| Température de la buse (°C) | 70 |
| Pression d'air de pulvérisation (bar) | 2,5 |
| Température du produit (°C) | 48-50 |
| Débit de pulvérisation (g/min) | 56-86 |

**Tableau N°5: Composition de la formulation F2**

| Composé | Pourcentage pondéral |
|---|---|
| Formulation F1 | 50 |
| Saccharinate de sodium | 47,3 |
| Vanilline | 1,4 |
| Maltol | 1,2 |
| Glycyrrhizinate de mono-ammonium | 0,2 |
| Total | 100 |

## Revendications

1. Additif pour l'alimentation animale se présentant sous forme de granulés, **caractérisé en ce que** :
- chaque granulé est une microparticule comprenant au moins un extrait de plante actif et/ou au moins un arôme incorporé(s) de façon homogène dans une matrice comprenant au moins un composé choisi parmi la maltodextrine, l'amidon natif ou modifié, la gomme arabique, la gomme guar, une lécithine, l'acide alginique ou ses dérivés, l'agar, la gomme de caroube, la gomme xanthane, le sorbitol ou ses dérivés, le mannitol, le glycérol, une pectine, un alginate, une carraggénane, la cellulose ou l'un de ses dérivés, une saponine, une graisse hydrogénée et un glycéride d'acide gras ou ses dérivés ; et
- chaque granulé est pourvu d'un enrobage comprenant au moins un composé choisi parmi les édulcorants.

2. Additif pour l'alimentation animale selon la revendication 1, dans lequel l'édulcorant est choisi dans le groupe constitué par la saccharine, le saccharinate de sodium ou de calcium, l'aspartame, l'acésulfame K, les cyclamates, les stéviosides et leurs mélanges.

3. Additif pour l'alimentation animale selon la revendication 2, dans lequel l'édulcorant est le saccharinate de sodium.

4. Additif pour l'alimentation animale selon la revendication 2, dans lequel l'édulcorant est un stévioside.

5. Additif pour l'alimentation animale selon l'une des revendications 1 à 4, dans lequel l'enrobage comprend en outre au moins un potentiateur.

6. Additif pour l'alimentation animale selon la revendication 5, le potentiateur est choisi dans le groupe constitué par la glycyrrhizine, le glycyrrhizinate d'ammonium, de potassium, de sodium, ou d'un autre métal alcalin ou alcalino-terreux, la thaumatine, le kokumi, la néohespéridine dihydrochalcone (NHDC) et les mélanges d'au moins deux de ces composés.

7. Additif pour l'alimentation animale selon l'une des revendications 1 à 6, dans lequel l'enrobage comprend en outre au moins un arôme.

8. Additif pour l'alimentation animale selon la revendication 7, dans lequel l'arôme est choisi dans le groupe constitué par la vanilline, l'éthyl-vanilline, le maltol, l'éthyl-maltol et leurs mélanges.

9. Additif pour l'alimentation animale selon l'une des revendications 1 à 8, comprenant :
- de 10 à 90% en poids d'enrobage ;
- de 10 à 90% en poids de noyau ;
- la somme de ces constituants étant égale à 100% du poids total de l'additif.

10. Additif pour l'alimentation animale selon l'une des revendications 1 à 9, dans lequel l'enrobage comprend :
- de 50 à 100% en poids d'édulcorant(s) ;
- de 0 à 25% et de préférence de 0 à 5% en poids de potentiateur(s) ; et
- de 0 à 25% en poids d'arôme(s) ;
- la somme de ces constituants étant égale à 100% du poids total de l'enrobage.

11. Additif pour l'alimentation animale selon l'une des revendications 1 à 10, dans lequel le noyau comprend :
- de 5 à 95% en poids d'extrait(s) de plante et/ou d'arôme(s) ;
- de 5 à 95% en poids de matrice ; et
- la somme de ces constituants étant égale à 100% du poids total du noyau.

12. Aliment pour animal d'élevage, comprenant 70 à 500 g/t d'additif selon l'une des revendications 1 à 11.

13. Utilisation d'un additif selon l'une quelconque des revendications 1 à 11, ou d'un aliment selon la revendication 12, pour favoriser la prise alimentaire chez un animal.

14. Procédé de préparation d'un additif pour l'alimentation animale selon l'une des revendications 1 à 11, dans lequel :
- on prépare une émulsion contenant au moins un extrait de plante actif et/ou au moins un arôme ainsi que le matériau devant constituer la matrice et qui comprend au moins un composé choisi parmi la maltodextrine, l'amidon natif ou modifié, la gomme arabique, la gomme guar, une lécithine, l'acide alginique ou ses dérivés, l'agar, la gomme de caroube, la gomme xanthane, le sorbitol ou ses dérivés, le mannitol, le glycérol, une pectine, un alginate, une carraggénane, la cellulose ou l'un de ses dérivés, une saponine, une graisse hydrogénée et un glycéride d'acide gras ou ses dérivés ;
- on pulvérise l'émulsion dans un lit fluidisé pour former des microparticules ; et
- on forme un enrobage autour des microparticules obtenues précédemment avec au moins un composé choisi parmi les édulcorants.

15. Procédé de préparation d'un additif pour l'alimentation animale selon la revendication 14, dans lequel, dans la troisième étape, l'enrobage est formé avec, outre le ou les édulcorant(s), au moins un potentiateur et/ou au moins un arôme.

16. Procédé selon la revendication 14, dans lequel, dans la première étape, le ou les extrait(s) de plante et/ou le ou les arôme(s) ainsi que les matériaux devant constituer la matrice et éventuellement un ou plusieurs émulsifiant(s), sont mis sous la forme d'une émulsion qui est ensuite pulvérisée pour former les microparticules.

17. Procédé selon la revendication 16, dans lequel l'émulsion est une émulsion aqueuse.

18. Procédé selon l'une des revendications 14 à 17, dans lequel la troisième étape comprend la mise en suspension des microparticules dans un lit d'air fluidisé.

19. Procédé selon l'une des revendications 14 à 18, dans lequel, dans la troisième étape, l'édulcorant, le potentiateur éventuel et/ou l'arôme éventuel sont mélangés puis pulvérisés sur les microparticules.

20. Procédé selon la revendication 19, dans lequel l'édulcorant et le potentiateur et/ou l'arôme éventuel(s) sont mélangés dans de l'eau puis la solution obtenue est pulvérisée sur les microparticules.

## Patentansprüche

1. Zusatz für Tierfutter, der in Granulatform bereitgestellt wird, **dadurch gekennzeichnet, dass**:
- Jedes Granulatkorn einen Mikropartikel umfasst, der sich aus mindestens einem aktiven Pflanzenextrakt und/oder mindestens einem Aromastoff zusammensetzt, die in eine Matrix integriert sind, die mindestens einen Bestandteil gewählt aus Maltodextrin, nativer oder modifizierter Stärke, Gummi Arabicum, Guarkernmehl, einem Lecithin, Alginsäure oder ihren Derivaten, Agar, Johannisbrotkernmehl, Xanthangummi, Sorbitol oder seine Derivate, Mannitol, Glyzerin, ein Pektin, ein Alginat, ein Carrageen, Zellulose oder eine ihrer Derivate, ein Saponin, ein gehärtetes Fett und ein Glyzerid von Fettsäuren oder seine Derivate; und
- Jeder Mikropartikel mit einer Beschichtung versehen ist, umfassend mindestens ein Bestandteil gewählt aus Süßungsmitteln.

2. Zusatz für Tierfutter wie in Anspruch 1 beansprucht, bei dem das Süßungsmittel gewählt ist aus der Gruppe bestehend aus Saccharin, Saccharin-Natrium, Saccharin-Kalzium, Aspartam, Acesulfam-K, Cyclamaten, Steviosiden und ihren Mischungen.

3. Zusatz für Tierfutter wie in Anspruch 2 beansprucht, bei dem das Süßungsmittel Saccharin-Natrium ist.

4. Zusatz für Tierfutter wie in Anspruch 2 beansprucht, bei dem das Süßungsmittel ein Steviosid ist.

5. Zusatz für Tierfutter wie in einem der Ansprüche 1 bis 4 beansprucht, bei dem die Beschichtung zusätzlich einen Potenziator umfasst.

6. Zusatz für Tierfutter wie in Anspruch 5 beansprucht, bei dem der Potenziator gewählt ist aus der Gruppe umfassend Glycyrrhizin, Ammoniumglycyrrhizinat, Natriumglycyrrhizinat oder das Glycyrrhizinat eines anderen Alkalimetalls oder Erdalkalimetalls, Thaumatin, Kokumi, Neohesperidin-Dihydrochalcone (NHDC) und die Mischungen von wenigstens zwei dieser Bestandteile.

7. Zusatz für Tierfutter wie in einem der Ansprüche 1 bis 6 beansprucht, bei dem die Beschichtung zusätzlich einen Aromastoff umfasst.

8. Zusatz für Tierfutter wie in Anspruch 7 beansprucht, bei dem der Aromastoff gewählt ist aus der Gruppe umfassend Vanillin, Ethyl Vanillin, Maltol, Ethyl-Maltol und deren Mischungen.

9. Zusatz für Tierfutter wie in einem der Ansprüche 1 bis 8 beansprucht, umfassend:
- 10 bis 90% Gewichtsprozent einer Beschichtung;
- 10 bis 90% Gewichtsprozent eines Kerns;
- wobei die Summe dieser Bestandteile 100% des Gesamtgewichts des Zusatzes entspricht.

10. Zusatz für Tierfutter wie in einem der Ansprüche 1 bis 9 beansprucht, bei dem die Beschichtung umfasst:
- 50 bis 100% Gewichtsprozent Süßungsmittel;
- 0 bis 25% und bevorzugt 0 bis 5% Gewichtsprozent Potenziator(en); und
- 0 bis 25% Gewichtsprozent Aromastoff(e);
- wobei die Summe dieser Bestandteile 100% des Gesamtgewichts der Beschichtung entspricht.

11. Zusatz für Tierfutter wie in einem der Ansprüche 1 bis 10 beansprucht, bei dem der Kern umfasst:
- 5 bis 95% Gewichtsprozent Pflanzenextrakt(e) und/oder Aromastoff(e);
- 5 bis 95% Gewichtsprozent Matrix; und
- wobei die Summe der Bestandteile 100% des Gesamtgewichts des Kerns entspricht.

12. Futter für Nutztiere umfassend 70 bis 500 g/t des Zusatzes wie in einem der Ansprüche 1 bis 11 beansprucht.

13. Verwendung eines Zusatzes, wie in einem der Ansprüche 1 bis 11 beansprucht, oder eines Futters, wie in Anspruch 12 beansprucht, zur Förderung der Futteraufnahme durch ein Tier.

14. Verfahren zur Herstellung eines Zusatzes für Tierfutter wie in einem der Ansprüche 1 bis 11 beansprucht, bei dem:
- eine Emulsion hergestellt wird, die mindestens ein aktives Pflanzenextrakt und/oder mindestens ein aktives Pflanzenextrakt umfasst, sowie das Material, das die Matrix bildet und das mindestens einen Bestandteil umfasst, gewählt aus Maltodextrin, nativer oder modifizierter Stärke Gummi Arabicum, Guarkernmehl, einem Lecithin, Alginsäure oder ihren Derivaten, Agar, Johannisbrotkernmehl, Xanthangummi, Sorbitol oder seine Derivate, Mannitol, Glyzerin, ein Pektin, ein Alginat, ein Carrageen, Zellulose oder eine ihrer Derivate, ein Saponin, ein gehärtetes Fett und ein Glyzerid von Fettsäuren oder seine Derivate;
- die Emulsion wird gesprüht, um Mikropartikel zu bilden; und
- eine Beschichtung wird um die oben erhaltenen Mikropartikel gebildet mit mindestens einem Bestandteil gewählt aus Süßungsmitteln.

15. Verfahren zur Herstellung eines Zusatzes für Tierfutter wie in Anspruch 14 beansprucht, bei dem, im zweiten Schritt, die Beschichtung gebildet wird mit, zusätzlich zu dem/den Süßungsmittel(n) mindestens einem Potenziator und/oder mindestens einem Aromastoff.

16. Verfahren wie in Anspruch 14 beansprucht, bei dem, im ersten Schritt, das/die Pflanzenextrakt(e) und/oder die Aromastoffe und Materialien, die die Matrix bilden sollen und, optional, ein oder mehrere Emulgatoren in die Form einer Emulsion überführt werden, die anschließend gesprüht wird, um Mikropartikel zu bilden.

17. Verfahren wir in Anspruch 16 beansprucht, bei dem die Emulsion eine wässrige Emulsion ist.

18. Verfahren wie in einem der Ansprüche 14 bis 17 beansprucht, bei dem der zweite Schritt die Suspendierung der Mikropartikel in einem Luft-Wirbelbett umfasst.

19. Verfahren wie in einem der Ansprüche 14 bis 18 beansprucht, bei dem im zweiten Schritt das Süßungsmittel, der optionale Potenziator und/oder der optionale Aromastoff gemischt wird und dann über die Mikropartikel gesprüht wird.

20. Verfahren wie in Anspruch 19 beansprucht, bei dem das Süßungsmittel und der optionale Potenziator und/oder der optionale Aromastoff in Wasser gemischt werden und dann die erhaltende Lösung über die Mikropartikel gesprüht wird.

## Claims

1. Additive for animal feed provided in the form of granules, wherein:
- each granule is a microparticle comprising at least one active plant extract and/or at least one flavoring incorporated homogeneously in a matrix comprising at least one compound chosen from maltodextrin, native or modified starch, gum arabic, guar gum, a lecithin, alginic acid or its derivatives, agar, locust bean gum, xanthan gum, sorbitol or its derivatives, mannitol, glycerol, a pectin, an alginate, a carrageenan, cellulose or one of its derivatives, a saponin, a hydrogenated fat, a glyceride of fatty acid or its derivatives; and
- each granule is provided with a coating comprising at least one compound chosen from sweeteners.

2. Additive for animal feed as claimed in claim 1, in which the sweetener is chosen from the group consisting of saccharin, saccharin sodium, saccharin calcium, aspartame, acesulfame-K, cyclamates, steviosides and their mixtures.

3. Additive for animal feed as claimed in claim 2, in which the sweetener is saccharin sodium.

4. Additive for animal feed as claimed in claim 2, in which the sweetener is a stevioside.

5. Additive for animal feed as claimed in one of claims 1 to 4, in which the coating additionally comprises at least one potentiator.

6. Additive for animal feed as claimed in claim 5, in which the potentiator is chosen from the group consisting of glycyrrhizin, ammonium glycyrrhizinate, potassium glycyrrhizinate, sodium glycyrrhizinate or the glycyrrhizinate of another alkali metal or alkaline-earth metal, thaumatin, kokumi, neohesperidin dihydrochalcone (NHDC) and the mixtures of at least two of these compounds.

7. Additive for animal feed as claimed in one of claims 1 to 6, in which the coating additionally comprises at least one flavoring.

8. Additive for animal feed as claimed in claim 7, in which the flavoring is chosen from the group consisting of vanillin, ethyl vanillin, maltol, ethyl maltol and their mixtures.

9. Additive for animal feed as claimed in one of claims 1 to 8, comprising:
- from 10 to 90% by weight of coating;
- from 10 to 90% by weight of core;
- the sum of these constituents being equal to 100% of the total weight of the additive.

10. Additive for animal feed as claimed in one of claims 1 to 9, in which the coating comprises:
- from 50 to 100% by weight of sweetener(s);
- from 0 to 25% and preferably from 0 to 5% by weight of potentiator(s); and
- from 0 to 25% by weight of flavoring(s);
- the sum of these constituents being equal to 100% of the total weight of the coating.

11. Additive for animal feed as claimed in one of claims 1 to 10, in which the core comprises:
- from 5 to 95% by weight of plant extract(s) and/or of flavoring(s);
- from 5 to 95% by weight of matrix; and
- the sum of these constituents being equal to 100% of the total weight of the core.

12. Feed for farmed animals, comprising from 70 to 500 g/t of additive as claimed in one of claims 1 to 11.

13. Use of an additive as claimed in one of claims 1 to 11, or of a feed as claimed in claim 12, for improving feeding an animal.

14. Process for the preparation of an additive for animal feed as claimed in one of claims 1 to 11, in which :
- we prepare an emulsion which comprises at least one active plant extract and/or at least one flavoring and the material which has to form the matrix and which comprises at least one compound chosen from maltodextrin, native or modified starch, gum arabic, guar gum, a lecithin, alginic acid or its derivatives, agar, locust bean gum, xanthan gum, sorbitol or its derivatives, mannitol, glycerol, a pectin, an alginate, a carrageenan, cellulose or one of its derivatives, a saponin, a hydrogenated fat and a glyceride of fatty acid or its derivatives;
- we spray the emulsion in a fluidized air bed in order to form microparticles; and
- we form a coating around the microparticles obtained above with at least one compound chosen from sweeteners.

15. Process for the preparation of an additive for animal feed as claimed in claim 14, in which, in the third stage, the coating is formed with, in addition to the sweetener(s), at least one potentiator and/or at least one flavoring.

16. Process as claimed in claim 14, in which, in the first stage, the plant extract(s) and/or the flavoring(s) and the materials which have to form the matrix and optionally one or more emulsifier(s) are put into the form of an emulsion which is subsequently sprayed in order to form the microparticles.

17. Process as claimed in claim 16, in which the emulsion is an aqueous emulsion.

18. Process as claimed in one of claims 14 to 17, in which the third stage comprises the suspending of the microparticles in a fluidized air bed.

19. The process as claimed in one of claims 14 to 18, in which, in the third stage, the sweetener, the optional potentiator and/or the optional flavoring are mixed and then sprayed over the microparticles.

20. Process as claimed in claim 19, in which the sweetener and the potentiator and/or the optional flavoring are mixed in water and then the solution is sprayed over the microparticles.
